# EUROPEAN PATENT SPECIFICATION

(11) **EP 4 686 402 B1**
(45) Date of publication and mention of the grant of the patent: **30.09.2026**
(21) Application number: 24192439.8
(22) Date of filing: 01.08.2024
(51) Int. Cl.: A01K 5/01, A01K 7/00

(54) **A PORTABLE ANIMAL FOOD AND WATER CONTAINER DEVICE**
TRAGBARE TIERNAHRUNGS- UND WASSERBEHÄLTERVORRICHTUNG
DISPOSITIF PORTATIF POUR ALIMENTS POUR ANIMAUX ET CONTENANT D'EAU

(43) Date of publication of application: 04.02.2026
(73) Proprietor: Doften.Se Sverige AB, 652 10 Karlstad (SE)
(72) Inventor: LJUNGQVIST, Amalia, 652 10 Karlstad (SE)
(74) Representative: Bjerkén Hynell KB

(56) References cited:
- US-A- 5 752 464
- US-A- 5 823 136
- US-A1- 2008 308 044
- US-A1- 2010 018 970
- US-A1- 2022 201 973
- US-B1- 7 263 949

## Description

### FIELD OF THE INVENTION

The present invention relates to animal food and water holding devices and more particularly pertains to an improved animal food and water holding device for simultaneously holding and transporting both animal food, such as dog food, and water for an animal.

### DESCRIPTION OF THE PRIOR ART

The use of animal food and water holding devices is known in the prior art. US 7,263,949 and US 5,752,464 describes a device having a pair of hinged containers which may be used for holding food and water for a pet animal. Another type of animal food and water holding device is U.S. Pat. No. 5,884,580 including a housing having two compartments therein wherein one of the compartments may be used for holding pet food and the other may be used for holding water. A multiple compartment housing for holding food during traveling is found in U.S. Pat. No. 5,787,839.

While these devices fulfill their respective, particular objectives and requirements, the need remains for a device to safely hold pet food and water so that the pet food and water may be easily and safely transported and enable easy and safe hygienic handling.

### SUMMARY OF THE INVENTION

The present invention meets the needs presented above by providing a portable animal food and water container device having features as defined in the claims appended hereto.

Thanks to the invention there are provided several advantages. One advantage is that the housings and inner cups may be produced in different materials, enabling optimized choice depending on desires, e.g. housing that may be durable and/or flexible and/or heat insulating, and inner cups that are easily handled and easily machine washed.

Further objects of the invention, along with the various features of novelty which characterize the invention, are pointed out with particularity in the dependent claims annexed to and forming a part of this disclosure.

### BRIEF DESCRIPTION OF THE DRAWINGS

The invention will be better understood and objects other than those set forth above will become apparent when consideration is given to the following detailed description thereof. Such description makes reference to the annexed drawings wherein:
FIG. 1 is a perspective view of an animal food and water container assembly according to the present invention in an opened position.
FIG. 2 is a cross-sectional view taken along a longitudinal center line 2-2 of FIG. 1 of the present invention, and,
FIG. 3 is a perspective view of a removable inner animal food and water cup according to the present invention.

### DESCRIPTION OF THE PREFERRED EMBODIMENT

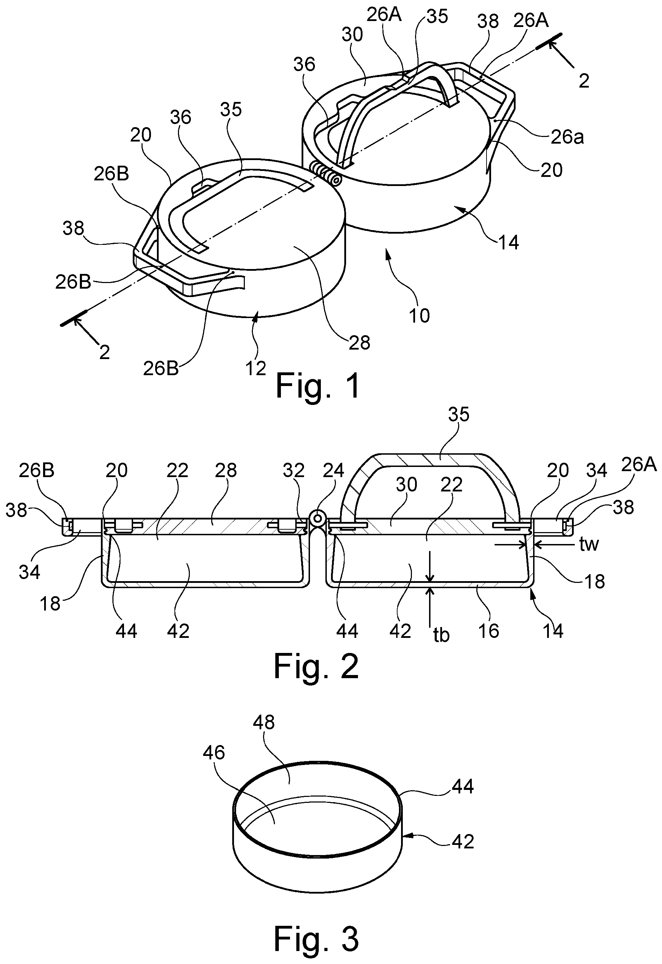

With reference now to the drawings, and in particular to FIGS. 1 through 3 thereof, a new animal food and water holding device embodying the principles and concepts of the present invention and generally designated by the reference numeral 10 will be described.

As best illustrated in FIGS. 1 through 3, the animal food and water container assembly 10 generally comprises a first housing 12 and a second housing 14. The first 12 and second 14 housings each include a bottom 16 wall and a peripheral wall 18 that is attached to and extends upwardly from a corresponding one of the bottom walls 16. Each of the peripheral walls 18 has a top edge 20 defining an opening 22 into the first 12 and second 14 housings. Each of the bottom walls 16 has a circular shape. A handle 38 is attached to an outer surface of each peripheral wall 18 of the housings 12, 14.

A hinge 24 is attached to an outer surface of each of the peripheral walls 18 and hingedly couples the first 12 and second 14 housings together. The top edges 20 of the first 12 and second 14 housings are positionable in a first position abutting each other or in a second position spaced from each other. A locking member 26 may be attached to the first 12 and second 14 housings and is configured to selectively secure the first 12 and second 14 housings in a closed position, wherein preferably the locking member 26 is in the form of one or more magnet arrangements 26A/26B, possibly one arrangement positioned along a centerline 2-2 as indicated in Fig 2, i.e. a magnet 26A centrally positioned within one handle half 38 and a ferromagnetic piece 26B centrally positioned within the other handle half 38. However, preferably a pair of magnets 26A and ferromagnetic piece/s 26B are used that are off centrally positioned, e.g. in the area of an attachment base of each handle half 38, as indicated in Fig. 1. Also, a traditional locking member 26 may be used, e.g. a pivotable hook attached to one of the housings that may be pivoted to secure the housings in a closed position or a kind of snap in arrangement.

A first cover 28 is removably positionable over an open space 22 in the first housing 12. A second cover 30 is removably positionable over an open space 22 in the second housing 14. The peripheral walls 18 each have a threaded inner surface 32 adjacent to a corresponding one of the top edges 20. Each of the first 28 and second 30 covers has a threaded perimeter edge 34. The first 28 and second 30 covers are each threadedly couplable to one of the peripheral walls 18.

A pair of grips 35 is provided. Each of the grips 35 is hingedly coupled to one of the first 28 and second 30 covers. Each of the first 28 and second 30 covers has a centrally located depression therein 36. The grips 35 are each positioned in one of the depressions 36 so that they may fold down and be positioned to not interfere in the abutting of the first 12 and second 14 housings against each other in the closed position. In one embodiment (not shown) one or each of the first 28 and second 30 covers may have different material in the surface that faces the inner of a cup 42, e.g. the main part of the cover being made in a polymer and a metallic layer being attached to the inner facing surface, which may improve the ability to maintain high hygienic levels.

Within each housing 12, 14 there is located a removable cup 42, each having a bottom wall 46 and a peripheral wall 48, which fit into the open space 22. Each cup is preferably made in a material that is easily washed in a hygienic manner, e.g. stainless steel. Further each cup 42 may be arranged with a sealing 44, e.g. an O-ring, at the top edge of peripheral wall 48 in order to securely sealing the cup 42, when the cover 28, 30 is threadedly brought in sealing contact with the sealing 44. Further, the sealing may increase comfort and minimize risk for injury due to presenting a soft upper edge without any sharp edges. In a modified embodiment (not shown) the sealing 44 may be located onto each cover 28, 30, e.g. in a groove, that is positioned to get into contact with the upper edge of said peripheral wall 48 of the cup 42.

Preferably the housings 12, 14 and said inner removable cups 42 are produced in different materials, suitably a polymer and stainless steel, respectively wherein preferably one of said parts, preferably said housings 12, 14, has a lambda value that is below 0,5 W/mK, more preferred below 0,1 W/mK, whereby extra good insulating properties are achieved, by providing an insulating air gap between the inner removable cups 42 and the housings 12, 14, which is achieved by inwardly having at least one protruding part of at least one of said housings 12, 14 extending inwardly from the bottom wall 16 (not shown) and/or the peripheral wall 18.

As shown in Fig. 2, according to a preferred embodiment, the thickness tb of the bottom is less that the thickness tw of the peripheral walls 18, at least at the upper portion of each peripheral walls 18. Possible advantages with such a design are firstly that it may provide a less heavy design and less costly design, but also that it enables production of housing parts that may be relatively flexible, which may make it less vulnerable to crack (e.g. when dropped) and also less damaging when hitting other objects.

In use, animal food, such as dog food, may be placed in the first cup 42 in the first housing 12 and secured therein with the first cover 28. Water may then be poured into the second cup and placed in the second housing 14 and secured therein with the second cover 30. The first 12 and second 14 housings may then be positioned in the closed position to provide a convenient carrying assembly until needed by a caretaker of an animal.

With respect to the above description then, it is to be realized that the optimum dimensional relationships for the parts of the invention, to include variations in size, materials, shape, form, function and manner of operation, assembly and use, are deemed readily apparent and obvious to one skilled in the art, and all equivalent relationships to those illustrated in the drawings and described in the specification are intended to be encompassed by the present invention. Therefore, the foregoing is considered as illustrative only of the principles of the invention. Further, since numerous modifications and changes will readily occur to those skilled in the art, it is not desired to limit the invention to the exact construction and operation shown and described, and accordingly, all suitable modifications and equivalents may be resorted to, falling within the scope of the invention.

## Claims

1. A portable animal food and water container device comprising:
a first housing (12) and a second housing (14), said first and second housings (12, 14) each including a bottom wall (16) and a peripheral wall (18) being attached to and extending upwardly from a corresponding one of said bottom walls (16), each of said peripheral walls (18) having a top edge (20) defining an open space (22) into said first and second housings (12, 14);
a hinge (24) being attached to an outer surface of each of said peripheral walls (18) and hingedly coupling said first (12) and second housings (14), said top edges (20) of said first and second housings (12, 14) being positionable in a closed position abutting each other or in a open position spaced from each other;
a locking member (26) being attached to at least one of said first and second housings (12, 14) and being configured to selectively secure said first (12) and second housing (14) in said closed position; and
a first cover (28) being removably positionable over said open space (22) in said first housing (12), a second cover (30) being removably positionable over said open space (22) in said second housing (14), said peripheral walls (18) each have a threaded inner surface (32) adjacent to a corresponding one of said top edges (20), each of said first (28) and second (30) covers having a threaded perimeter edge (34) extending between an upper surface and a lower surface of each of said first (28) and second (30) covers, each of said first (28) and second (30) covers being threadably couplable to one of said peripheral walls (18),
a pair of grips (35), each of said grips (35) being hingedly coupled to one of said first (28) and second (30) covers,
**characterized by**, a pair of inner removable cups (42), each having a bottom wall (46) and a peripheral wall (48), each secured in said open space (22) by means of said first cover (28) and said second cover (30), respectively and wherein at least one of said housings (12, 14) is arranged with at least one inwardly protruding part providing an insulating air gap between said at least one of said housings (12, 14) and at least one of said inner removable cups (42).

2. The device according to claim 1, wherein each of said bottom walls (16, 46) has a circular shape.

3. The device according to claim 1 or 2, wherein said housings (12, 14) and said inner removable cups (42) are produced in different materials, suitably a polymer and stainless steel, respectively, wherein preferably one of said parts, preferably said housings (12, 14) has a lambda value that is below 0,5 W/mK, more preferably below 0,1 W/mK.

4. The device according to any of claims 1-3, further including a sealing (44) arranged between the top edge (20) of said peripheral wall (48) of at least one of said pair of inner removable cups (42) and a facing part of at least one of said covers (28, 30).

5. The device according to claim 4, further including said sealing (44) being arranged between the top edge (20) of said peripheral wall (48) of both of said pair of inner removable cups (42) and a facing part of both of said covers (28, 30).

6. The device according to any of claims 4 or 5, further including that said sealing (44) is attached to said top edge (20) of said peripheral wall (48).

7. The device according to any preceding claim, further including a handle half (38) being attached to each outer surface of said peripheral wall (18) of said housing (12, 14).

8. The device according to any preceding claim, further including that said locking device (26) is in the form of at least one magnet (26A, 26B), preferably a pair of magnets, wherein more preferably said pair of magnets are positioned off centered in relation to a longitudinal center line (2-2).

9. The device according to any preceding claim, further including that the thickness (tb) of the bottom wall (16) of at least one of said housings is less than the largest thickness (tw) of its peripheral wall (18), wherein preferably the thickness (tb) of the bottom wall (16) of said housing is less than 50 % of the largest thickness (tw) of said peripheral wall (18).

10. The device, according to claim 8, further including that the thickness (tw) of said peripheral wall (18) is increasing from adjacent the bottom wall (16) to adjacent said top edge (20).

11. The device according to any preceding claim, further including that both of said housings (12, 14), are arranged with at least one inwardly protruding part, preferably a plurality of inwardly protruding parts, providing an insulating air gap between both of said housings (12, 14) and both of said inner removable cups (42), wherein preferably said plurality of inwardly protruding parts are arranged both at said bottom wall (16) and said peripheral wall (18).

## Patentansprüche

1. Eine tragbare Vorrichtung zum Transport von Tierfutter und -wasser, umfassend: ein erstes Gehäuse (12) und ein zweites Gehäuse (14), wobei jedes Gehäuse (12, 14) eine Bodenwand (16) und eine Umfangswand (18) aufweist, die an der jeweiligen Bodenwand (16) befestigt ist und sich von dieser nach oben erstreckt. Jede Umfangswand (18) besitzt eine Oberkante (20), die einen offenen Raum (22) in das erste und zweite Gehäuse (12, 14) einschließt; ein Scharnier (24), das an der Außenfläche jeder Umfangswand (18) befestigt ist und das erste (12) und zweite Gehäuse (14) gelenkig miteinander verbindet. Die Oberkanten (20) des ersten und zweiten Gehäuses (12, 14) können in einer geschlossenen, aneinander anliegenden Position oder in einer geöffneten, voneinander beabstandeten Position positioniert werden. ein Verriegelungselement (26), das an mindestens einem der ersten und zweiten Gehäuse (12, 14) angebracht ist und so konfiguriert ist, dass es das erste (12) und das zweite Gehäuse (14) wahlweise in der geschlossenen Position sichert; und eine erste Abdeckung (28), die abnehmbar über dem offenen Raum (22) im ersten Gehäuse (12) positioniert werden kann, eine zweite Abdeckung (30), die abnehmbar über dem offenen Raum (22) im zweiten Gehäuse (14) positioniert werden kann, wobei die Umfangswände (18) jeweils eine Gewindeinnenfläche (32) aufweisen, die an eine entsprechende Oberkante (20) angrenzt, wobei jede der ersten (28) und zweiten (30) Abdeckungen einen Gewinderand (34) aufweist, der sich zwischen der Ober- und Unterseite der jeweiligen Abdeckung erstreckt, wobei jede der ersten (28) und zweiten (30) Abdeckungen mit einer der Umfangswände (18) verschraubt werden kann, ein Paar Griffe (35), wobei jeder der Griffe (35) gelenkig mit einer der ersten (28) und zweiten (30) Abdeckungen verbunden ist, **gekennzeichnet durch** ein Paar herausnehmbarer Innenbecher (42), die jeweils eine Bodenwand (46) und einen Die periphere Wand (48) ist jeweils mittels der ersten Abdeckung (28) bzw. der zweiten Abdeckung (30) in dem offenen Raum (22) befestigt, wobei mindestens eines der Gehäuse (12, 14) mit mindestens einem nach innen vorstehenden Teil versehen ist, der einen isolierenden Luftspalt zwischen dem mindestens einen der Gehäuse (12, 14) und mindestens einem der inneren herausnehmbaren Becher (42) bildet.

2. Die Vorrichtung nach Anspruch 1, wobei jede der Bodenwände (16, 46) kreisförmig ist.

3. Die Vorrichtung nach Anspruch 1 oder 2, wobei die Gehäuse (12, 14) und die inneren herausnehmbaren Becher (42) aus unterschiedlichen Materialien, vorzugsweise einem Polymer bzw. Edelstahl, gefertigt sind, wobei vorzugsweise eines der Teile, insbesondere die Gehäuse (12, 14), einen λ-Wert von unter 0,5 W/mK, besonders bevorzugt unter 0,1 W/mK, aufweist.

4. Die Vorrichtung nach einem der Ansprüche 1 bis 3, ferner umfassend eine Dichtung (44), die zwischen der Oberkante (20) der Umfangswand (48) mindestens eines der beiden inneren herausnehmbaren Becher (42) und einem gegenüberliegenden Teil mindestens eines der Deckel (28, 30) angeordnet ist.

5. Die Vorrichtung nach Anspruch 4, ferner umfassend, dass die Dichtung (44) zwischen der Oberkante (20) der Umfangswand (48) beider inneren herausnehmbaren Becher (42) und einem gegenüberliegenden Teil beider Deckel (28, 30) angeordnet ist.

6. Die Vorrichtung nach einem der Ansprüche 4 oder 5, ferner umfassend, dass die Dichtung (44) an der Oberkante (20) der Umfangswand (48) befestigt ist.

7. Die Vorrichtung nach einem der vorhergehenden Ansprüche, ferner umfassend, dass an jeder Außenfläche der Umfangswand (18) des Gehäuses (12, 14) eine Griffhälfte (38) befestigt ist.

8. Die Vorrichtung nach einem der vorhergehenden Ansprüche, ferner umfassend, dass die Verriegelungsvorrichtung (26) aus mindestens einem Magneten (26A, 26B), vorzugsweise aus zwei Magneten, besteht, wobei die beiden Magneten vorzugsweise außermittig zu einer Längsachse (2-2) angeordnet sind.

9. Die Vorrichtung nach einem vorhergehenden Anspruch, ferner umfassend, dass die Dicke (tb) der Bodenwand (16) mindestens eines der Gehäuse geringer ist als die größte Dicke (tw) seiner Umfangswand (18), wobei die Dicke (tb) der Bodenwand (16) des Gehäuses vorzugsweise weniger als 50 % der größten Dicke (tw) der Umfangswand (18) beträgt.

10. Die Vorrichtung nach Anspruch 8, ferner umfassend, dass die Dicke (tw) der Umfangswand (18) von der angrenzenden Bodenwand (16) bis zur angrenzenden Oberkante (20) zunimmt.

11. Die Vorrichtung nach einem der vorhergehenden Ansprüche, ferner dadurch, dass beide Gehäuse (12, 14) mit mindestens einem nach innen vorstehenden Teil, vorzugsweise mit mehreren nach innen vorstehenden Teilen, versehen sind, die einen isolierenden Luftspalt zwischen den beiden Gehäusen (12, 14) und den beiden inneren herausnehmbaren Bechern (42) bilden, wobei die mehreren nach innen vorstehenden Teile vorzugsweise sowohl an der Bodenwand (16) als auch an der Umfangswand (18) angeordnet sind.

## Revendications

1. Dispositif portable de stockage d'eau et d'aliments pour animaux comprenant : un premier boîtier (12) et un second boîtier (14), chacun des boîtiers (12, 14) comportant une paroi inférieure (16) et une paroi périphérique (18) fixée à la paroi inférieure (16) correspondante et s'étendant vers le haut à partir de celle-ci, chaque paroi périphérique (18) présentant un bord supérieur (20) délimitant un espace ouvert (22) dans les boîtiers (12, 14) ; une charnière (24) fixée à la surface extérieure de chaque paroi périphérique (18) et reliant les boîtiers (12) et (14) par une charnière, les bords supérieurs (20) des boîtiers (12, 14) pouvant être positionnés soit fermés et accolés, soit ouverts et espacés l'un de l'autre. un élément de verrouillage (26) étant fixé à au moins l'un desdits premier et deuxième boîtiers (12, 14) et étant configuré pour sécuriser sélectivement ledit premier (12) et deuxième boîtier (14) dans ladite position fermée ; et un premier couvercle (28) amovible et positionnable sur l'espace ouvert (22) du premier boîtier (12), un second couvercle (30) amovible et positionnable sur l'espace ouvert (22) du second boîtier (14), les parois périphériques (18) présentant chacune une surface intérieure filetée (32) adjacente à l'un des bords supérieurs (20), chacun des couvercles (28 et 30) possédant un bord périmétrique fileté (34) s'étendant entre sa surface supérieure et sa surface inférieure, chacun des couvercles (28 et 30) pouvant être fixé par filetage à l'une des parois périphériques (18), une paire de poignées (35), chacune étant articulée à l'un des couvercles (28 ou 30), **caractérisée par** une paire de coupelles intérieures amovibles (42), chacune comportant une paroi inférieure (46) et une paroi périphérique (48), chacun étant fixé dans ledit espace ouvert (22) au moyen dudit premier couvercle (28) et dudit deuxième couvercle (30), respectivement et dans lequel au moins un desdits boîtiers (12, 14) est disposé avec au moins une partie saillante vers l'intérieur fournissant un espace d'air isolant entre ledit au moins un desdits boîtiers (12, 14) et au moins une desdites coupelles amovibles intérieures (42).

2. Dispositif selon la revendication 1, dans lequel chacune des parois inférieures (16, 46) présente une forme circulaire.

3. Dispositif selon la revendication 1 ou 2, dans lequel les boîtiers (12, 14) et les coupelles intérieures amovibles (42) sont réalisés en matériaux différents, de préférence un polymère et de l'acier inoxydable respectivement, l'une de ces pièces, de préférence les boîtiers (12, 14), présentant un coefficient d'absorption thermique (λ) inférieur à 0,5 W/mK, et plus particulièrement inférieur à 0,1 W/mK.

4. Dispositif selon l'une quelconque des revendications 1 à 3, comprenant en outre un joint d'étanchéité (44) disposé entre le bord supérieur (20) de la paroi périphérique (48) d'au moins une des deux coupelles intérieures amovibles (42) et la face d'au moins un des couvercles (28, 30).

5. Dispositif selon la revendication 4, comprenant en outre ledit joint (44) disposé entre le bord supérieur (20) de ladite paroi périphérique (48) des deux coupelles internes amovibles (42) et une partie de face des deux couvercles (28, 30).

6. Dispositif selon l'une quelconque des revendications 4 ou 5, comprenant en outre que ledit joint (44) est fixé audit bord supérieur (20) de ladite paroi périphérique (48).

7. Dispositif selon l'une quelconque des revendications précédentes, comprenant en outre une demi-poignée (38) fixée à chaque surface extérieure de ladite paroi périphérique (18) dudit boîtier (12, 14).

8. Dispositif selon l'une quelconque des revendications précédentes, comprenant en outre que ledit dispositif de verrouillage (26) est constitué d'au moins un aimant (26A, 26B), de préférence d'une paire d'aimants, ces derniers étant plus particulièrement excentrés par rapport à un axe longitudinal (2-2).

9. Dispositif selon l'une quelconque des revendications précédentes, comprenant en outre que l'épaisseur (tb) de la paroi inférieure (16) d'au moins un desdits boîtiers est inférieure à l'épaisseur maximale (tw) de sa paroi périphérique (18), de préférence que l'épaisseur (tb) de la paroi inférieure (16) dudit boîtier est inférieure à 50 % de l'épaisseur maximale (tw) de ladite paroi périphérique (18).

10. Dispositif selon la revendication 8, comprenant en outre que l'épaisseur (tw) de ladite paroi périphérique (18) augmente depuis le voisinage de la paroi inférieure (16) jusqu'au voisinage dudit bord supérieur (20).

11. Le dispositif selon l'une quelconque des revendications précédentes, comprenant en outre que les deuxdits boîtiers (12, 14) sont disposés avec au moins une partie saillante vers l'intérieur, de préférence une pluralité de parties saillantes vers l'intérieur, fournissant un espace d'air isolant entre les deuxdits boîtiers (12, 14) et les deux desdites coupelles amovibles intérieures (42), dans lequel de préférence ladite pluralité de parties saillantes vers l'intérieur sont disposées à la fois sur ladite paroi inférieure (16) et sur ladite paroi périphérique (18).
